# EUROPÄISCHE PATENTSCHRIFT

(11) **EP 2 528 434 B1**
(45) Veröffentlichungstag und Bekanntmachung des Hinweises auf die Patenterteilung: **07.09.2016**
(21) Anmeldenummer: 10742999.5
(22) Anmeldetag: 05.07.2010
(51) Int. Cl.: A01N 25/12, A01N 25/00, A01N 25/18

(54) **VERFAHREN ZUM HERSTELLEN EINES MIT EINEM PHEROMON IMPRÄGNIERTEN GRANULATS**
METHOD FOR PRODUCING A GRANULATE IMPREGNATED WITH A PHEROMONE
PROCÉDÉ DE PRÉPARATION DE GRANULÉS IMPRÉGNÉS D'UNE PHÉROMONE

(30) Priorität: 29.01.2010 AT 1192010
(43) Veröffentlichungstag der Anmeldung: 05.12.2012
(73) Patentinhaber: Lithos Industrial Minerals GmbH, 4482 Ennsdorf (AT)
(72) Erfinder: MITTERDORFER, Jürgen, A-9555 Glanegg (AT)
(74) Vertreter: Patentanwaltskanzlei Hübscher
(86) Internationale Anmeldenummer: PCT/AT2010/000243
(87) Internationale Veröffentlichungsnummer: WO 2011/091450

(56) Entgegenhaltungen:
- EP-A1- 1 064 843
- EP-A1- 1 676 480
- WO-A1-03/061383
- JP-A- 2001 072 506
- JP-A- 2009 114 131

## Beschreibung

### Technisches Gebiet

Die Erfindung bezieht sich auf ein Verfahren zum Herstellen eines mit einem Pheromon imprägnierten Granulats, wobei ein Zeolithgranulat mit einem verdünnten Pheromonkonzentrat imprägniert wird.

### Stand der Technik

Pheromone sind Semiochemikalien, also Botenstoffe, die das Verhalten von Insekten steuern. So können beispielsweise von Weibchen ausgesandte Pheromone Männchen anlocken. Bestimmte, künstlich hergestellte Pheromone können daher auch zum Anlocken von Männchen in Insektenfallen eingesetzt werden. Es ist aber auch möglich, geeignete Pheromone flächendeckend aufzubringen, um das Auffinden von Weibchen in diesem Gebiet zu verhindern, weil dann die überwiegende Mehrzahl der Pheromonquellen nicht einem Weibchen zugeordnet sind. Dieses auf eine Irreführung der männlichen Insekten zurückgehende Konfusionsverfahren kann die Vermehrung eines Schädlings in einem vorgegebenen Gebiet in umweltschonender Art auf ein nicht störendes Maß beschränken, wenn es gelingt, die auf einen Schädling abgestimmten Pheromone über die zu schützende Anbaufläche in einem für die Konfusion des Schädlings ausreichenden Ausmaß zu verteilen und die Abgabe dieser Pheromone über eine Zeitspanne zu gewährleisten, innerhalb der die zu bekämpfenden Schädlinge sexuell aktiv sind. Um diesen Forderungen nachzukommen, wurde bereits vorgeschlagen (WO 99/044420 A1), Zeolith als Trägersubstanz für Pheromone zum Anlocken unterschiedlicher Insekten einzusetzen, wobei durch eine vergleichsweise aufwendige Behandlung der Zeolithe die Abgabe der vom jeweiligen Zeolith aufgenommenen Pheromone über eine entsprechende Zeitspanne erstreckt werden soll.

Das Dokument (EP 1 676 480 A1) beschreibt eine thermische Behandlung von Zeoltih als Träger für ein Pheromonpräparat. Es wird berichtet, dass das Pheromon in das Kristallgitter des kristallinen Minerals eingebaut wird.

Da die teuren Pheromone nicht in einer Überdosierung, sondern nur in einer für die angestrebte Langzeitwirkung ausreichende Menge eingesetzt werden sollen, ist das eingesetzte Trägergranulat mit einer entsprechend geringen Menge an Pheromonen so zu imprägnieren, dass eine allmähliche Freigabe der Pheromone über den vorgegebenen Wirkungszeitraum zumindest angenähert erreicht wird, was sich jedoch in der Praxis als schwierig herausstellt, weil einerseits eine gleichmäßige Konzentration sehr geringer Pheromonmengen im Trägergranulat sichergestellt und anderseits für eine allmähliche Freigabe der Pheromone über einen vorgegebenen Wirkungszeitraum gewährleistet werden muss.

### Darstellung der Erfindung

Der Erfindung liegt somit die Aufgabe zugrunde, ein Verfahren zum Herstellen eines mit einem Pheromon imprägnierten Granulats so auszugestalten, dass das Zeolithgranulat das aufgenommene, verdünnte Pheromonkonzentrat unter üblichen Umweltbedingungen während einer vorgegebenen Zeitspanne allmählich freigibt, ohne eine erhebliche Überdosierung bezüglich des Pheromoneinsatzes in Kauf nehmen zu müssen.

Ausgehend von einem Verfahren zum Herstellen eines mit einem Pheromon imprägnierten Granulats der eingangs geschilderten Art löst die Erfindung die gestellte Aufgabe dadurch, dass zunächst das Zeolithgranulat auf einen Feuchtigkeitsgehalt unter 3 Gew. % getrocknet wird, bevor der Feuchtigkeitsgehalt des Zeolithgranulats wieder durch Zufuhr des verdünnten Pheromonkonzentrats auf 5 bis 9 Gew.% angehoben wird.

Der Erfindung liegt die Erkenntnis zugrunde, dass der natürliche Wassergehalt der Zeolithe das Imprägnieren der Zeolithe insbesondere im Hinblick auf die Langzeitwirkung der Pheromonfreisetzung beeinträchtigt, weil offensichtlich den natürlichen Wassergehalt übersteigende Feuchtigkeit umweltbedingt ohne weiteres abgegeben werden kann. Wird somit ein wesentlicher Teil des sonst vom natürlichen Wassergehalt besetzten Speichervolumens der Zeolithe zur Aufnahme eines entsprechend verdünnten Pheromonkonzentrats genützt, so können Pheromone auch über längere Zeiträume weitgehend unabhängig von umweltbedingten Feuchtigkeitsschwankungen allmählich freigesetzt werden. Es wird daher das Zeolithgranulat zunächst auf einen Feuchtigkeitsgehalt unter 3 Gew.% getrocknet, bevor der Feuchtigkeitsgehalt des Zeolithgranulats durch Zufuhr des verdünnten Pheromonkonzentrats zum Anlocken einer bestimmten Insektenart wieder auf einen dem natürlichen Feuchtigkeitsgehalt entsprechenden Wert von 5 bis 9 Gew.% angehoben wird.

Die Korngröße des Zeolithgranulats kann entsprechend dem jeweiligen Einsatz unterschiedlich gewählt werden. So ist es durchaus möglich, ein feinpulveriges Zeolithgranulat einzusetzen, beispielsweise um daraus Tabletten zu pressen oder das Granulat mit einer Flüssigkeit zu versprühen. Soll das Zeolithgranulat jedoch mit herkömmlichen Streugeräten aufgebracht werden, so ist die Körnung des Zeolithgranulats an die Streubedingungen dieser Geräte anzupassen, sodass von einem Zeolithgranulat mit einem durchschnittlichen Korndurchmesser zwischen 0,2 und 4,0 mm ausgegangen werden kann. Bevorzugt werden in diesem Zusammenhang Zeolithgranulate mit einem durchschnittlichen Korndurchmesser von 1 bis 2 mm eingesetzt.

Um größere Mengen an verdünntem Pheromonkonzentrat innerhalb des natürlichen Wassergehalts aufnehmen zu können, kann das Zeolithgranulat auf eine Restfeuchtigkeit unter 1 Gew.% getrocknet werden, bevor seine Imprägnierung mit einem verdünnten Pheromonkonzentrat erfolgt. Der bevorzugte Feuchtigkeitsgehalt, den das Zeolithgranulat nach seiner Imprägnierung mit dem verdünnten Pheromonkonzentrat aufweist, liegt zwischen 7 und 8 Gew.%, also unterhalb der Sättigung, die üblicherweise bei 12 bis 14 Gew.% Feuchtigkeit erreicht wird.

Das mit Pheromonen für bestimmte Insektenarten imprägnierte Zeolithgranulat kann für unterschiedliche Aufgabenstellungen eingesetzt werden. So ist es möglich, durch entsprechend ausgewählte Pheromone bestimmte Insekten anzulocken oder fernzuhalten. Die Lockwirkung der Pheromone kann dabei sowohl für Insektenfallen als auch für Konfusionsverfahren vorteilhaft über entsprechend lange Zeiträume genützt werden.

### Wege zur Ausführung der Erfindung

Zum Schutz einer Maiskultur gegen den Maiswurzelbohrer können beispielsweise 50 bis 60 kg eines entsprechend imprägnierten Zeolithgranulats auf eine Feldfläche von 1 ha aufgebracht werden. Dies ergibt bei einem mittleren Korndurchmesser des Granulats von 1,8 mm und einer mittleren Granulatdichte von 2,3 g/cm³ eine Anzahl von 80 bis 107 Körner des Zeolithgranulats je m². Als Pheromon wird ein handelsübliches Pheromonkonzentrat (0,066 g Pheromon in 1 ml Hexan) zum Anlocken männlicher Maiswurzelbohrer eingesetzt, wobei zum Beispiel 5 ml Pheromonkonzentrat mit 3,3 I Hexan als Verdünnungsmittel vermischt werden, um mit diesem verdünnten Pheromonkonzentrat die für 1 ha vorgesehene Menge an Zeolithgranulat zu imprägnieren. Zu diesem Zweck wird gemäß einem Ausführungsbeispiel 55 kg Zeolithgranulat mit einer Körnung zwischen 1,5 und 3 mm auf eine Restfeuchte von 1,5 Gew.% thermisch getrocknet und dann mit dem verdünnten Pheromonkonzentrat in einem Chargenmischer homogen vermischt. Das Aufbringen des verdünnten Pheromonkonzentrats auf das Zeolithgranulat erfolgt mittels einer Sprüheinrichtung in zeitlichen Abständen, um eine homogene Pheromonverteilung auf das gesamte Zeolithgranulat sicherzustellen. Nach dem Mischvorgang weist das Zeolithgranulat eine Feuchtigkeit im Bereich von 7 bis 8 Gew.% auf.

Vor dem Aufbringen dieses imprägnierten Zeolithgranulats auf ein Maisfeld wird das Zeolithgranulat luftdicht verpackt, um ein vorzeitiges Freisetzen der Pheromone zu vermeiden. Im Gegensatz zu bisherigen Versuchen, Zeolithe als Trägerstoff für Pheromone zum Schutz von Maiskulturen gegen den Maiswurzelbohrer durch eine Konfusionswirkung einzusetzen, kann das Zeolithgranulat nach der Erfindung mit geringen Mengen an entsprechenden Pheromonen so imprägniert werden, dass eine allmähliche Freigabe der Pheromone über den vorgegebenen Wirkungszeitraum von zumindest drei Monaten erreicht wird, also über einen der Flugperiode des Maiswurzelbohrers entsprechenden Zeitraum.

In vergleichbarer Art kann zum Beispiel auch die Vermehrung von Borkenkäfern durch eine Konfusionswirkung weitgehend verhindert werden. In diesem Fall werden vorzugsweise 90 ml eines auf Borkenkäfer abgestimmten Pheromons für eine Fläche von 1 ha eingesetzt, wobei 10 kg Zeolithgranulat mit einem entsprechenden Pheromonkonzentrat imprägniert wird. Zu diesem Zweck wird das Zeolithgranulat wiederum auf eine Restfeuchte von 1,5 Gew.% getrocknet und dann das entsprechend verdünnte Pheromonkonzentrat in einem Mischer auf das Zeolithgranulat aufgesprüht. Die Verdünnung des Pheromonkonzentrats erfolgt dabei in einem Ausmaß, das eine Feuchtigkeit des Zeolithgranulats nach der Imprägnierung im Bereich von 7 bis 8 Gew.% ergibt.

## Patentansprüche

1. Verfahren zum Herstellen eines mit einem Pheromon imprägnierten Granulats, wobei ein Zeolithgranulat mit einem verdünnten Pheromonkonzentrat imprägniert wird, **dadurch gekennzeichnet, dass** zunächst das Zeolithgranulat auf einen Feuchtigkeitsgehalt unter 3 Gew. % getrocknet wird, bevor der Feuchtigkeitsgehalt des Zeolithgranulats wieder durch Zufuhr des verdünnten Pheromonkonzentrats auf 5 bis 9 Gew.% angehoben wird.

2. Verfahren nach Anspruch 1, **dadurch gekennzeichnet, dass** das Zeolithgranulat auf eine Restfeuchtigkeit unter 1 Gew.% getrocknet wird.

3. Verfahren nach Anspruch 1 oder 2, **dadurch gekennzeichnet, dass** das Zeolithgranulat durch Zufuhr des verdünnten Pheromonkonzentrats auf einen Feuchtigkeitsgehalt zwischen 7 und 8 Gew.% angehoben wird.

4. Verfahren nach einem der Ansprüche 1 bis 3, **dadurch gekennzeichnet, dass** ein Zeolithgranulat mit einem durchschnittlichen Korndurchmesser zwischen 0,2 und 4,0 mm, vorzugsweise zwischen 1 und 2 mm, eingesetzt wird.

## Claims

1. Method for producing a granulate which is impregnated with a pheromone, wherein a zeolite granulate is impregnated with a diluted pheromone concentrate, **characterised in that** initially the zeolite granulate is dried to a moisture content of less than 3% by weight before the moisture content of the zeolite granulate is then increased to 5 to 9% by weight by supplying the diluted pheromone concentrate.

2. Method as claimed in claim 1, **characterised in that** the zeolite granulate is dried to a residual moisture of less than 1% by weight.

3. Method as claimed in claim 1 or 2, **characterised in that** the zeolite granulate is increased to a moisture content between 7 and 8% by weight by supplying the diluted pheromone concentrate.

4. Method as claimed in any one of claims 1 to 3, **characterised in that** a zeolite granulate having an average grain diameter between 0.2 and 4.0 mm, preferably between 1 and 2 mm, is used.

## Revendications

1. Procédé de préparation de granulés imprégnés d'une phéromone, selon lequel des granulés de zéolite sont imprégnés d'un concentré de phéromone dilué, **caractérisé en ce que** les granulés de zéolite sont séchés dans un premier temps de manière à présenter une teneur en humidité inférieure à 3 % en poids, avant que la teneur en humidité des granulés de zéolite soit élevée à nouveau à une valeur comprise entre 5 et 9 % en poids par amenée du concentré de phéromone dilué.

2. Procédé selon la revendication 1, **caractérisé en ce que** les granulés de zéolite sont séchés à une humidité résiduelle inférieure à 1 % en poids.

3. Procédé selon la revendication 1 ou 2, **caractérisé en ce que** les granulés de zéolite sont élevés par amenée du concentré de phéromone dilué à une teneur en humidité comprise entre 7 et 8 % du poids.

4. Procédé selon l'une des revendications 1 à 3, **caractérisé en ce que** sont utilisés des granulés de zéolite avec un diamètre de grain moyen compris entre 0,2 et 4 mm, de préférence entre 1 et 2 mm.
